(19) **Europäisches Patentamt**
**European Patent Office**
**Office européen des brevets**

(11) **EP 2 996 293 B1**

(12) **EUROPEAN PATENT SPECIFICATION**

(45) Date of publication and mention
of the grant of the patent:
**30.08.2017 Bulletin 2017/35**

(51) Int Cl.:
*H04L 12/873* (2013.01)     *H04L 12/875* (2013.01)

(21) Application number: **14290275.8**

(22) Date of filing: **12.09.2014**

(54) **A PACKET SCHEDULING NETWORKING DEVICE FOR DEADLINE AWARE DATA FLOWS**

PAKETABLAUFSTEUERUNGSVERNETZUNGSVORRICHTUNG FÜR FRISTBEWUSSTE
DATENSTRÖME

DISPOSITIF DE MISE EN RÉSEAU DE PROGRAMMATION DE PAQUETS POUR DES FLUX DE
DONNÉES SENSIBLES À UNE ÉCHÉANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.03.2016 Bulletin 2016/11**

(73) Proprietor: **ALCATEL LUCENT
92100 Boulogne-Billancourt (FR)**

(72) Inventors:
 • **Tang, Siyu
2018 Antwerpen (BE)**
 • **De Vleeschauwer, Danny
2018 Antwerpen (BE)**

(74) Representative: **ALU Antw Patent Attorneys
Copernicuslaan 50
2018 Antwerpen (BE)**

(56) References cited:
**WO-A1-2009/130218     US-A1- 2009 285 217**

 • **WONGTHAVARAWAT K ET AL: "PACKET
SCHEDULING FOR QOS SUPPORT IN IEEE
802.16 BROADBAND WIRELESS ACCESS
SYSTEMS", INTERNATIONAL JOURNAL OF
COMMUNICATION SYSTEMS, WILEY,
CHICHESTER, GB, vol. 16, 1 January 2003
(2003-01-01), pages 81-96, XP002516156, ISSN:
1074-5351, DOI: 10.1002/DAC.581 [retrieved on
2003-01-01]**

 • **COX D C ET AL: "An Adaptive Cross-Layer
Scheduler for Improved QoS Support of
Multiclass Data Services on Wireless Systems",
IEEE JOURNAL ON SELECTED AREAS IN
COMMUNICATIONS, IEEE SERVICE CENTER,
PISCATAWAY, US, vol. 23, no. 2, 1 February 2005
(2005-02-01), pages 334-343, XP011126486, ISSN:
0733-8716, DOI: 10.1109/JSAC.2004.839381**

 • **CRAWFORD L ET AL: "A DYNAMIC WEIGHTED
FAIR QUEUING ALGORITHM FOR OPEN AND
PROGRAMMABLE NETWORKS",
PROCEEDINGS OF THE INTERNATIONAL
CONFERENCE ON TELECOMMUNICATIONSICT,
XX, XX, vol. 1, 1 January 2002 (2002-01-01), pages
510-515, XP009060393,**

 • **XIMING ZENG ET AL: "A bandwidth-efficient
scheduler for MPLS diffserv networks",
MODELING, ANALYSIS, AND SIMULATION OF
COMPUTER AND TELECOMMUNICATIONS
SYSTEMS, 2004. (MASCOTS 2004).
PROCEEDINGS. THE IEEE COMPUTER
SOCIETY' S 12TH ANNUAL INTERNATIONAL
SYMPOSIUM ON VOLENDAM, THE
NETHERLANDS, EU OCT. 4-8, 2004,
PISCATAWAY, NJ, USA,IE, 4 October 2004
(2004-10-04), pages 251-258, XP010737161, DOI:
10.1109/MASCOT.2004.1348279 ISBN:
978-0-7695-2251-7**

EP 2 996 293 B1

- **WANG Y ET AL: "Performance comparison of scheduling algorithms in network mobility environment", COMPUTER COMMUNICATIONS, ELSEVIER SCIENCE PUBLISHERS BV, AMSTERDAM, NL, vol. 31, no. 9, 8 June 2008 (2008-06-08), pages 1727-1738, XP022668022, ISSN: 0140-3664, DOI: 10.1016/J.COMCOM.2007.11.017 [retrieved on 2007-12-04]**

## Description

### Technical Field

The disclosure relates to the field of networking devices that receive data packets such as for example IP or Internet Protocol packets on one or more network interfaces, forward these packets to queues assigned to a specific network interface and schedule the transmission over this network interface. Examples of such devices are network switches, routers and gateways.

Within such devices the queues are used to buffer the packets temporarily before they are transmitted. Which packets are served in which order is determined by a scheduler according to a certain scheduling policy.

### Background

Data packets handled by networking devices typically belong to data flows. Such a data flow carries the data packets from a specific source to a specific destination for a certain application. Some applications such as streaming video applications or interactive applications need a timely delivery of the data packets, i.e., the data packets must be delivered before a certain deadline. Other applications such as email may not have such strict deadlines.

Different schemes and protocols have been proposed that may be applied to data flows and networking devices in order to deliver data packets before their deadline. A first scheme is a strict priority scheme where packets with the most urgent deadline are prioritized in the networking device at the expense of the delivery of less urgent packets. Such a scheme is for example proposed by the SCAP protocol.

The DiffServ protocol allows traffic to be classified into classes, and treats each class differently. It introduces 6 bits as the DiffServ Code Point or DSCP in the type of service or ToS field of the IP header. The DSCP is used for packet classification and marking. The applications are expected to keep the sending rate within the traffic profile of the DSCP. A metering function then compares the incoming packet flow with the negotiated traffic profile. If the amount of packets exceeds the limit set by the profile, the packet rate is dropped. Packet forwarding in DiffServ is based on per-hop behavior or PHB associated with the packet's class. DiffServ defines a few service classes that can be indicated by the DSCP, e.g., "expedited forwarding" (EF), "assured forwarding" (AF), besides the "best effort" (BE) class of traditional networks without priority treatment.

The Deadline-aware Data Center TCP protocols incorporate deadline-awareness onto the existing Datacenter TCP or DCTCP protocol. The DCTCP protocol is in its turn an enhancement to the TCP congestion control algorithm aimed to optimize data center networks.

In D3 TCP proposed by C. Wilson, H. Ballani, T. Karagiannis, A. Rowstron, in "Betfer Never Than Late: Meeting Deadlines in Datacenter Networks", In Proc. SIGCOMM, 2011, the networking devices grant a sender's request for the required bandwidth based on the data flow size and its deadline. It incorporates the idea of deadline awareness into the network by proactively allocating bandwidth based on bandwidth reservation before data transmission.

The D2 TCP algorithm proposed by B. Vamanan, J. Hasan and T. N. Vijaykumar in "Deadline-aware datacenter TCP (D2 TCP)", ACM SIGCOMM Computer Communication Review, 42 (4): 115-126. 2012, utilizes a distributed and reactive approach to modulate the TCP window size based on the emergency of deadlines. The congestion window of flows with a deadline in the far future backs off substantially while the flows with more immediate deadline back off only moderately or not at all. K. Wongthavarawat et al.: "Packet scheduling for QoS support in IEEE 802.16 broadband wireless access systems" describes a networking device for scheduling a transmission of packets over a network interface comprising a forwarding module for forwarding packets to a plurality of queues for temporally buffering said packets. The device also comprising a deadline aware queue for buffering data packets belonging to data flows with hard deadline requirements and for serving said packets to a strict priority scheduler according to an Earliest Deadline First policy and one or more non-deadline aware queues.

### Summary

The first scheme where a fixed priority is used, may starve data flows without strict deadlines as deadline aware packets are prioritized at all times. It is therefore an object to propose schemes that address the deadlines of the deadline aware data flows without starving out the other data flows.

DiffServ guarantees the quality of service (QoS) for the traffic class with higher priority with a fixed-rate bandwidth reservation and, hence, lacks flexibility under dynamic network conditions. Moreover, the deadlines are not directly guaranteed by DiffServ but indirectly through the fixed-rate reservation.

The drawback of D3 TCP is that the networking devices allocate bandwidth on a first-come-first-serve basis. This means that the scheme may allocate bandwidth to flows with a deadline in the far future that arrive at the switch ahead of flows with more immediate deadlines. Hence, this scheme often inverts the priority of flow requests, and this in turn contributes to missed deadlines.

Both D2 and D3 TCP try to reduce missing deadlines without a hard guarantee on deadline violation. There is thus no quantitative measure if the available bandwidth is sufficient to deliver all traffic within their deadlines.

It is an object of the current disclosure to alleviate the above problems and shortcomings.

According to a first aspect, this object is achieved by a networking device for scheduling the transmission of packets over a network interface. The device comprises a forwarding module configured to forward these packet to a plurality of queues for temporally buffering these packets. The queues comprises a deadline aware queue for queueing data packets belonging to data flows with hard deadline requirements and for serving the packets to a dynamic weighted fair-queue scheduler according to an Earliest Deadline First or EDF policy. The queues also comprise one or more non-deadline aware queues for queueing data packets belonging to data flows without hard deadline requirements. The device also comprises this dynamic weighted fair-queue scheduler for retrieving the packets from the queues. A weight for the deadline aware queue is then based on a minimum rate requirement for the queue in order to meet the hard deadline requirements. The device also comprises a forwarding module for forwarding the packets to the queues.

In a weighted fair-queue or WFQ scheduler queues get shares of the bandwidth or thus the available data rate of the network interface according to weights that are assigned to the queues. The networking device comprises one or more separate queues for deadline aware data flows, i.e., data packets of data flows with hard deadline requirements are forwarded to the deadline aware queue. For a deadline-aware queue at a specific moment in time filled with of the packets of which the deadline is known, there exists a minimum rate that is required to fulfill all deadlines. When the WFQ scheduler retrieves a packet from a deadline aware queue, the packet with the earliest deadline is fetched from the queue for transmission. This way, when the queue would be designated this minimum rate requirement, all data packets in the deadline aware queue would arrive on or before their respective deadline. The weight that is assigned to the deadline aware queue is based on this minimum rate requirement. Upon arrival of new deadline-aware packets this minimum rate may change. The other non-deadline aware queues may serve the packets to the WFQ scheduler by a FIFO or First-In First-Out scheduling policy, i.e., packets that arrived first in the queue leave the queue first. When packets marked with their deadlines enter the deadline-aware queue, the queue may then re-arrange or sort the packets in an ascending order with respect to their deadlines, i.e., smallest deadline at the head of the queue, largest deadline at the tail. This way, the WFQ scheduler fetches the packets according to an "earliest deadline first" policy. The packets may further be IP or Internet Protocol data packets.

Preferably, the weight may be chosen such that the rate of the deadline aware queues matches their minimum rate requirement. The remaining bandwidth is then designated to the other non-deadline aware queues by choosing their weights appropriately. It is thus an advantage that the one or more deadline aware queues get just the rate needed for just in time delivery of their data packets, allowing data packets of other queues to take precedence over packets with hard deadlines. Alternatively the weight may also be chosen such that the rate of the deadline aware queue is below the minimum rate requirement, for example when there is a maximum or upper limit to the rate of the deadline aware queue. In such a case, some of the deadline requirements will not be met, but it is known which deadlines will not be met and appropriate actions may be taken. In other words, by basing the weight of the deadline aware queue on the minimum rate requirement, an optimum is achieved in the amount of non-deadline aware data packets that are given precedence over deadline aware packets while keeping control over which hard deadlines will or will not be met.

According to a preferred embodiment, the networking device further comprises a controller configured to perform the following steps:

- Calculating the minimum rate requirement.
- Deriving therefrom a granted rate.
- Calculating the weight from the granted rate and a bandwidth of the network interface.
- Assigning the weight to the deadline aware queue.

The weights may thus be dynamically assigned to the queues in an easy and straightforward manner. From the minimum rate requirement it is decided which rate will actually be granted to the deadline aware queue. From the granted rate, the weight can then be obtained, for example by the ratio between the granted rate and the total bandwidth of the network interface. If the granted rate is greater or equal than the minimum rate, all hard deadline requirements will be met. If the granted rate is smaller than the minimum rate, not all hard deadline requirements will be met. The remaining bandwidth that is not assigned to the deadline aware queue is then assigned to the other queues.

Alternatively to the case where the controller resides in the networking device, the controller may also reside outside the device. The controller may for example correspond to a software defined networking controller which logically sits above a plurality of networking devices in a data network.

As the weights are dynamically assigned, the above steps may be performed again at regular moments in time. According to an embodiment these steps are performed:

- when a new deadline aware data flow is forwarded to the deadline aware queue by the forwarding module, and/or
- when an existing deadline aware data flow exits, and/or
- after a predefined duration since the steps were last performed.

This allows anticipating the changing network conditions. For example, when a data flow exits, a lower weight can be assigned to the deadline aware queue thereby allowing more non deadline aware packets to be transmitted over the network interface while guaranteeing the deadline requirements of the other data flows.

Advantageously, a congestion signal is sent to a data flow source when a requested hard deadline requirement cannot be met. This allows, in the case where the rate of the deadline aware queue is chosen below the minimum rate requirement, to alarm the data source before it could detect the failure of meeting the deadline itself.

According to a further embodiment, the calculating of the minimum rate requirement comprises:

- predicting a most probable request pattern for each data flow in the deadline aware queue,
- calculating a number of bits to be delivered in between deadlines of the data flows to fulfil the predicted request pattern,
- calculating a bit rate for delivering the bits by at least the deadlines as the minimum rate requirement.

By calculating the minimum rate this way, one packet will arrive on its deadline and the other packets will arrive on or before their deadline thereby achieving a good estimate for the minimum rate requirement.

According to a second aspect, the disclosure relates to a computer implemented method for scheduling the transmission of IP packets over a network interface of a networking device. The device comprises a forwarding module configured to forward these packet to a plurality of queues for temporally buffering these packets. The queues comprises a deadline aware queue for queueing data packets belonging to data flows with hard deadline requirements and for serving said packets to a dynamic weighted fair-queue scheduler according to an earliest deadline first policy. The queues also comprises one or more non-deadline aware queues for queueing data packets belonging to data flows without hard deadline requirements. The device also comprises a dynamic weighted fair-queue scheduler for retrieving the packets from the queues. A weight for the deadline aware queue is then based on a minimum rate requirement for the queue in order to meet the hard deadline requirements. The method then comprises the following steps:

- calculating this minimum rate requirement,
- deriving therefrom a granted rate,
- calculating the weight from the granted rate and a bandwidth of the network interface,
- assigning the weight to the deadline aware queue.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspects.

Such a data processing system may for example be a software defined networking controller.

## Brief Description of the Drawings

Fig. 1 illustrates a networking device according to an embodiment of the invention; and

Fig. 2 illustrates steps performed by a controller to obtain a weight for a deadline aware queue in a networking device according to an embodiment; and

Fig. 3 illustrates steps performed by a controller to obtain a minimum rate requirement for a deadline aware queue to fulfil all deadline requirements; and

Fig. 4 shows an illustrative example of the bandwidth requirements of seven deadline aware data flows as a function of time; and

Fig. 5 shows an illustrative example of actual bitrates of seven deadline aware data flows together with the requested bitrates according to the deadlines of the data flows; and

Fig. 6 illustrates the difference between the deadline of a bit of a deadline aware data flow and the actual delivery time of a bit for the example of Fig. 4 and Fig. 5 and where the granted rate is equal to the minimum rate requirement; and

Fig. 7 illustrates the difference between the deadline of a bit of a deadline aware data flow and the actual delivery time of a bit for the example of Fig. 4 and Fig. 5 and where the granted rate is lower than the minimum rate requirement; and

Fig. 8 illustrates a data access network comprising a software defined networking controller and networking devices according to an embodiment; and

Fig. 9 illustrates a hardware architecture of a controller according to an embodiment.

Fig. 10 shows a pseudo code representation of an algorithm for calculating a minimum rate requirement.

## Detailed Description of Embodiment(s)

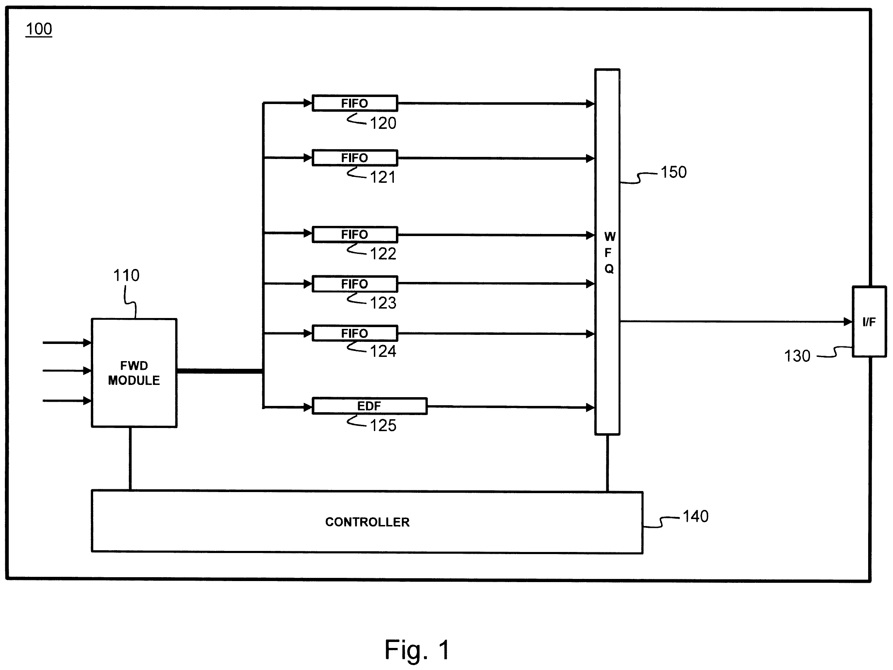

Fig. 1 illustrates a networking device 100 according to an embodiment of the invention. The networking device may be a router or a switch performing switching and routing functions in a network by forwarding packets received from one of its network interfaces to one of its other network interfaces or ports. For the forwarding, the networking device 100 comprises a forwarding module 110. This forwarding module takes as input the packets received by the device 100 on one of its network interfaces. By performing packet inspection it then decides to forward the packets towards one or more of its ports. For a port 130 the device 100 has a plurality of queues 120 till 125 for the buffering of packets received from the forwarding module.

The queues are divided in queues for buffering deadline aware data packets and queues for buffering non-deadline aware data packets. Deadline aware data packets have a strict deadline requirement specifying the deadline by which they should have arrived at their destination. Typically such packets belong to data flows between a source and destination for a certain application, for example voice or video for which it is critical that the data arrives before a certain deadline. The queue 125 in the device 100 of Fig. 1 is reserved for data packets with such a hard deadline requirements while the queues 120 to 124 are reserved for data packets without hard deadline requirements. Packets with hard deadline requirement may for example support the SCAP protocol by which the deadline of a data flow can be defined. Upon arrival of a packet, the forwarding module 110 inspects the data packets and forwards them to the relevant queue. The other queues 120 to 124 may further be assigned for buffering different types of non-deadline aware data packets. This may for example be done according to a priority typically referred to as a Quality of Service or QoS class. Examples of QoS classes are Voice data traffic, Video data traffic, Controlled Load or CL services and traffic and Best Effort or BE traffic and services. The QoS class may be indicated in the packet header by the DiffServ Code Point or DSCP field of the IP header of a data packet. A QoS class is further defined in ITU-T Recommendation E.800 of September 2008 as "The totality of characteristics of a telecommunications service that bear on its ability to satisfy stated and implied needs of the user of the service." A group of end-to-end quality performance values - or range - for a service is denoted 'class of service'. A service offering may have around three to five classes of services with specified performance limits for the various parameters. These classes of services are usually provided to accommodate different tariffs to the customer. Certain classes of traffic are handled differently from other classes of traffic, and the classes achieve different levels of QoS, which is referred to as the QoS classes.

The forwarding module 110 determines to which queue each packet is forwarded. Based on whether the packet has a hard deadline and the priority of the packet, it assigned to one of the queues 120 to 125.

The weighted fair queueing or WFQ scheduler 150 then retrieves the packets from the queues 120-125 according to a fair weighted scheduling policy and forwards them to the network interface 130 for transmission over the network medium. A weight assigned to each queue 120 to 125 then guarantees a certain maximum relative bitrate for data traffic in the respective queue with respect to the total data rate or bandwidth of the interface 130. As the deadline aware data traffic is sorted into its own weighted queue 125, the congestion mechanisms applied by the source and destination of the traffic will only affect the other deadline aware data traffic and not the data flows in the other queues 120-124. This way, deadline aware traffic cannot starve a data flow that is not deadline aware, even if they belong to the same QoS class.

The deadline aware queue 125 will serve the WFQ scheduler the packet in its buffer with the earliest deadline first. When packets marked with their deadlines enter the deadline-aware queue, the queue may re-arrange or sort the packets in an ascending order with respect to their deadlines, i.e., smallest deadline at the head of the queue, largest deadline at the tail. This way the deadline aware queue 125 has an Earliest Deadline First or EDF policy for serving its packets to the WFQ scheduler 150. The non-deadline aware queues 120-124 serve the WFQ scheduler the packets in their buffer according to a FIFO or First-In First-Out policy, i.e., the packet that was forwarded first in the FIFO queue, leaves the queue first.

In Fig. 1, only one deadline aware queue 125 is shown, but according to alternative embodiments, the networking device 100 may also comprise more than one deadline aware queue. For example, a differentiation may be made between deadline aware traffic belonging to different QoS classes.

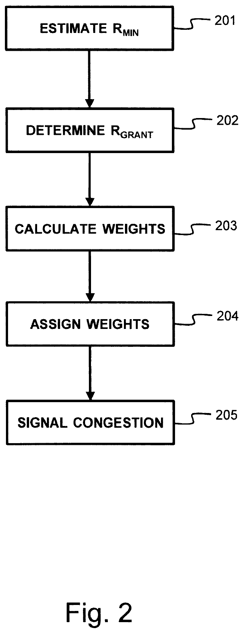

According to an embodiment, the device 100 also comprises a controller 140. The controller determines the weights of the queues 120-125 by first calculating the weight for the deadline aware queue 125 based on a minimum rate requirement $R_{min}$ for the queue 125. Fig. 2 illustrates steps executed by the controller in order to obtain the weight $w_0$ of the deadline aware queue 125.

In the first step 201, the minimum rate requirement $R_{min}$ of the deadline aware queue is estimated. $R_{min}$ is the minimum needed data rate to deliver all data packets in the deadline aware queue within their respective deadline and with a certain margin.

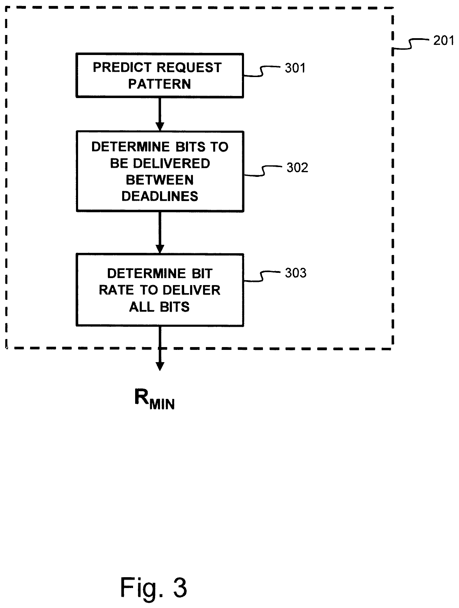

Fig. 3 illustrates the steps executed by the controller 140 to determine $R_{min}$ according to an embodiment. The following symbols and definitions will be used for this:

- N(t) is defined as the number of flows with deadline requests arriving at the device 100 or predicted as the most probable sequence of requests at a certain time t.
- $\gamma_i(t)$ is the certainty of a request i at a time t where $0 < \gamma i(t) \leq 1$. The higher value $\gamma_i(t)$ takes, the more certainty a request has, i.e., $\gamma_i(t)=1$ indicates that a request is known for sure. The more uncertain a request becomes, the lower the value $\gamma_i(t)$ is assigned. The latter case refers to flows that may arrive further in the future, or flows with adverse record, e.g., frequent cancellation/modification of requests of the senders who initiated the requests.
- $s_i(t)$ is the size of a flow i in bits which is either known with certainty or predicted as the most probable case at time t.
- $d_b(i;t)$ is the begin deadline of a data flow i which is either known with certainty or predicted as the most probable at time t.
- $d_e(i;t)$ is the end deadline of flow i either known with certainty or predicted as the most probable case at time t.
- $\Delta(t)$ is the deadline margin at time $t$ ($\Delta(t) > 0$).

Each data flow i with $1 \leq i \leq N(t)$ thus has its associated size $s_i(t)$ in bits, its begin deadline $d_b(i;t)$ and its end-deadline $d_e(i;t)$. The begin deadline defines when to deliver the first bit of flow i, and the end deadline defines the time before or at which the last bit of the flow should be received by the receiver. It is assumed that the end receiver of the data flow has a large enough play-out buffer that can store bits that are delivered before their deadline, so that delivery of bits before their actual deadline poses no problem. The controller 140 maintains a deadline margin $\Delta(t)$ ($\Delta(t) \geq 0$) for deadline assurance. A flow i is required to be delivered no later than $d_e(i) - \Delta(t)$. The higher value $\Delta(t)$ takes, the more stringent the QoS requirement the system imposes. The deadline margin is a configurable parameter and may be changed over time depending on the traffic density and available network capacity.

In the first step 301 of Fig. 3 the request pattern $\gamma_i(t)$ for the data flows in the queues is predicted. In the near future the requests are known with certainty, but for the further future a prediction of the future requests needs to be made. The certainty $\gamma_i(t)$ may be calculated according to the following example. As an initial condition, $\gamma_i = 1$, i.e., the certainty is set to 1 for all incoming requests at present or in the future. The measure of certainty is gradually adapted and improved over time by processing past user traces. This is done by computing the probability that users are going to consume the content as being requested, i.e., without request cancellation or abortion. In the simplest case, the certainty depends on how far the request starts in the future. The continuous time $u$ is split into a number of small bins

$$f(u_{k-1}) = \frac{m_{u_{k-1}}}{n_{u_{k-1}}}$$

with size $\Delta u$, i.e., $\Delta u = u_k - u_{k-1}$. From the past user trace, $f(u_{k-1}) = \frac{m_{u_{k-1}}}{n_{u_{k-1}}}$ indicates that out of the $n_{ut_{k-1}}$ requests whose begin deadline are bounded by $u_{k-1} \leq d_b(i) - t_0 < u_k$, $m_{u_{k-1}}$ requests are scheduled or watched without abortion where $t_0$ is the actual packet delivery time. Hence, upon the arrival of a new incoming request $i$, the certainty is predicted as $\gamma_i = f(d_b(i) - t_0)$ by mapping the request begin deadline to a proper bin. The prediction of the request pattern is not limited to this example. Other relevant input parameters may be taken into account such as for example the end deadline, request size or request duration. An alternative for calculating $\gamma_i$ is to consider the relationship between the number of bits that are supposed to be delivered for certain requests and the number of bits that are actually delivered, i.e., incomplete delivery due to request cancellation or abortion. Once the incoming request $i$ is processed, it is used to update $f(x)$, where the symbol x denotes different inputs that the function $f()$ may take, and, thus, to improve the accuracy of the prediction. The relative value of $d_b(i) - t_0$ is used in this example as one of the possible inputs to evaluate the certainty of the request.

Once the most probable request pattern is determined under step 301, the controller proceeds to step 302. In this step, the total number of bits that need to be delivered in between the beginning or an ending of a deadline is determined. First, a sorting operation is performed to all deadlines of the N flows in the ascending order resulting in a

list of timestamps $t_k$, where each $t_k$ corresponds to the beginning or ending of a deadline of a data flow. Instead of applying real-time scheduling to the data flows where the delivery starts precisely at a flow's starting deadline, flows may be scheduled and delivered upfront where possible.

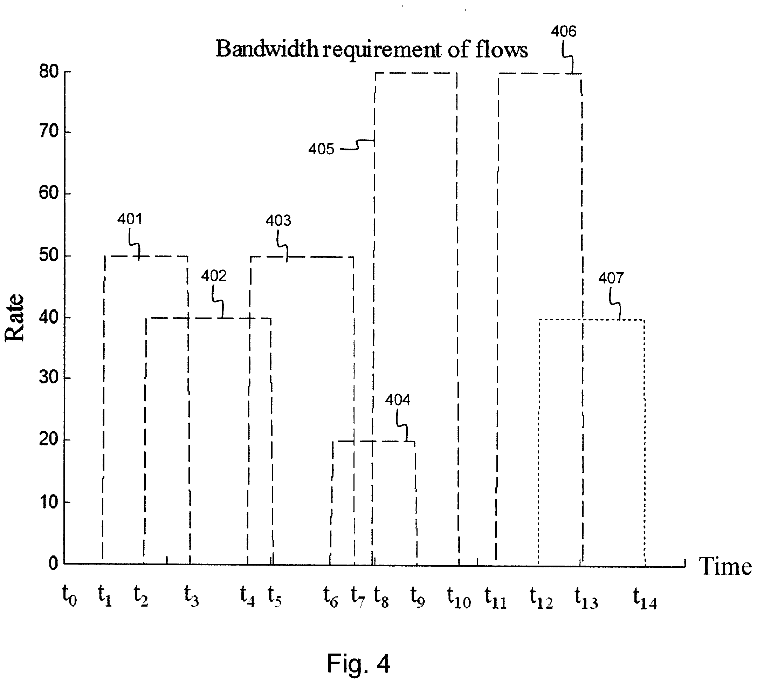

Fig. 4 provides an example of the deadline arrangement of seven data flows 401 to 407 with the deadline margin set to 0, i.e., $\Delta(t)=0$. On the Y-axis the needed data rate or request pattern of the data flows 401 to 407 is plotted as a function of time on the X-axis. The request pattern of the data flows is known with certainty, i.e., $\gamma=1$. The arrangement of deadline requests is not limited to the particular example presented in Fig. 4. It is possible that different flows may share the same start or end deadlines. In this particular case, $t_1=d_b(1)$, $t_2=d_b(2)$, $t_{3=}d_e(1)$, etc. The duration between two discrete timestamps $t_k$ and $t_{k-1}$ is then defined as $\tau_k= t_k- t_{k-1}$ where k=1,...,2N, e.g., $\tau_1= t_1- t_0$, $\tau_2= t_2- t_1$, etc.

Then the average sending rate of flow i during interval $\tau_k$ is calculated as follows:

$$r_i(\tau_k) = \begin{cases} \dfrac{s_i}{d_e(i) - d_b(i)} & \text{if } d_b(i) < t_k \leq d_e(i) \\ 0 & \text{otherwise} \end{cases} \qquad \text{(Eq. 1)}$$

where the contribution of the physical propagation delay is neglected from the calculation. From the average sending rate, the total number of bits of all N data flows to be delivered during interval $\tau_k$ is obtained by the following equation:

$$C_{tot}(\tau_k) = \sum_{i=1}^{N} r_i(\tau_k) \cdot \gamma_i \cdot \tau_k \qquad \text{(Eq. 2)}$$

where the certainty $\gamma_i$ determines the amount of bits to be delivered during interval $\tau_k$. The less probable a request is, the less bit-rate shall be allocated to that request. For flows that are known for sure, i.e., where $\gamma_i=1$.

Then the controller proceeds to step 303 of Fig. 3 where the minimum rate requirement $R_{min}$ is calculated by a minimum bandwidth allocation algorithm that updates the $R_{min}$ iteratively over the 2N timestamps that were obtained in step 301, assuming $\gamma_i=1$ for all flows.

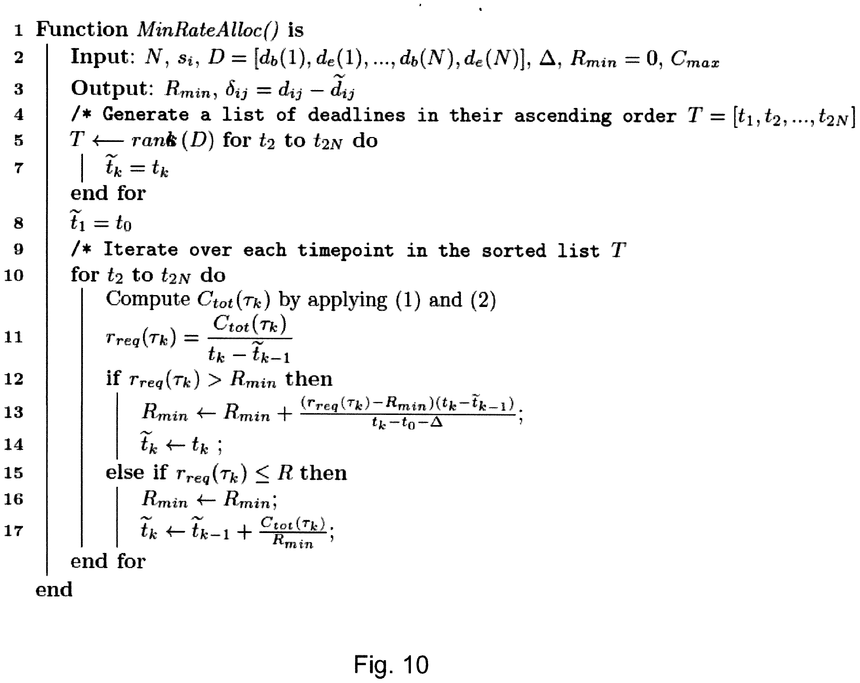

A pseudo code representation of this algorithm is shown in Fig. 10 with line number references used below shown at the left side of Fig. 10. The symbol $\sim$ is used to indicate a value that is updated at each iterative step. By default, $\tilde{t}_k = t_k$ as an initialization step for each timestamp, with the exception for $\tilde{t}_1 = t_0$ on line 8 because the actual delivery time for the N flows starts one to.

The minimum bandwidth calculation algorithm then performs the following operations:

- The iteration is initiated as from $t_2$ (line 10).
- For each $t_k$, the scheduler calculates the requested sending rate $r_{req}(\tau_k)$, where $t_k - \tilde{t}_{k-1}$ is the actual delivery time for the $C_{tot}(\tau_k)$ bits based on the bandwidth issued in previous iterations (line 11).
- If $r_{req}(\tau_k)$ is larger than the previously allocated rate, $R_{min}$ is increased (line 13) and the actual delivery time at timestamp $t_k$ remains unchanged (line 14).
- If $r_{req}(\tau_k)$ is smaller than the previously allocated rate, $R_{min}$ remains unaltered (line 16), while the actual delivery time at timestamp $t_k$ is reduced (line 17);

If the deadline margin is $\Delta(t)=0$, then, at the end of the algorithm, there will be one data flow that will be delivered precisely at its deadline if the deadline aware traffic is constrained to $R_{min}$. The remaining data flows will then be delivered ahead of their deadlines. In case of a more stringent deadline margin $\Delta> 0$, all data flows will be delivered ahead of their deadlines if the deadline aware data flows is allocated the calculated bandwidth $R_{min}$.

When $R_{min}$ is obtained, the controller proceeds to step 202 of Fig. 2. In this step, a granted rate $R_{grant}$ is determined based on the minimum rate requirement $R_{min}$. The granted rate is the rate that will actually be assigned to the deadline aware queue 125 of the networking device 100 in Fig. 1. In case of concurrent heterogeneous types of data traffic in the networking device 100, thus in the case where there is a deadline aware queue 125 and one or more non-deadline aware queues 120-124, the non-deadline aware traffic may be penalized for not carrying hard deadline information.

By not assigning the granted rate $R_{grant}$ the complete bandwidth of the channel and thus the interface 130, the data traffic without deadlines will never be starved by deadline-aware traffic. Therefore, the granted rate $R_{grant}$ may be based on some criterion, e.g., that the bandwidth reserved for data traffic with hard deadlines does not exceed a certain portion of the link rate and that the granted rate does not fluctuate wildly over time. In case the granted rate $R_{grant}$ is smaller than the minimum rate requirement $R_{min}$, some hard deadlines will not be met.

When the granted rate is obtained from step 202, the weight $w_0$ of the deadline aware queue is derived therefrom in step 203 by the following equation:

$$w_0 = \frac{R_{grant}}{C_{agg}} \qquad \text{(Eq. 3)}$$

Where $C_{agg}$ is the physical link capacity at the interface 130. Assigning the weight $w_0$ with $R_{grant}$ guarantees that the remaining non deadline aware data traffic is not starved by the deadline aware queue 125. The weights $w_1$ to $w_N$ of the other non-deadline aware queues 120-124 may then be chosen based on the priority or QoS requirements of data traffic in the respective queues. Since the data traffic for both deadline aware and non-deadline aware traffic may fluctuate over time, the set of weights $[w_0, w_1, ... w_N]$ may vary as a function of time depending on the traffic density of both type of flows and the QoS requirement of the traffic.

The controller 140 then proceeds to step 204 and assigns the weights to the queues 120-125 for the scheduler 150.

In the case that $R_{grant}$ has been chosen smaller than $R_{min}$, not all data packets in the deadline aware queue 125 will arrive before their hard deadline. Therefore, the controller may proceed to the last step 205 where a signal is sent to the source of the affected data flow to inform that the hard deadline will not be met. This way, the source may adapt the rate of its data packets such that the minimum rate requirement $R_{min}$ decreases towards the granted rate $R_{grant}$.

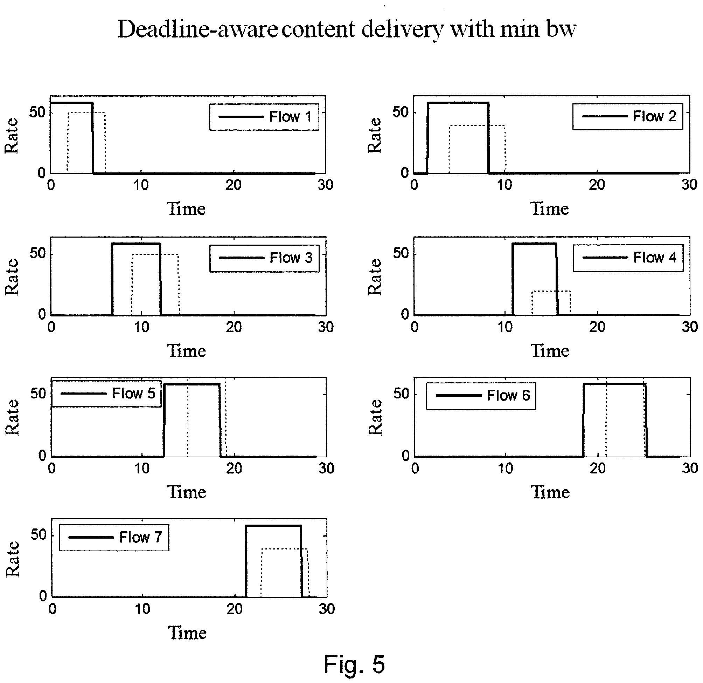

Fig. 5 illustrates, for the same example with the seven data flows of Fig. 4, the actual rate of each flow (solid line) and the original requested deadline (dotted line). In this case, the granted rate $R_{grant}$ was chosen equal to the minimum rate requirement $R_{min}$ without deadline margin, i.e., with $\Delta(t)=0$. Because of this, one of the flows, Flow 6 in this case, will be completed just on its hard deadline.

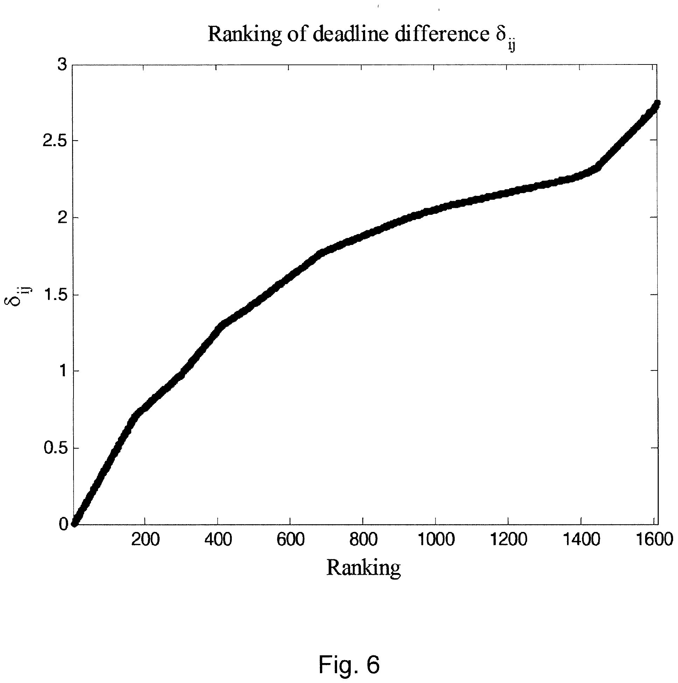

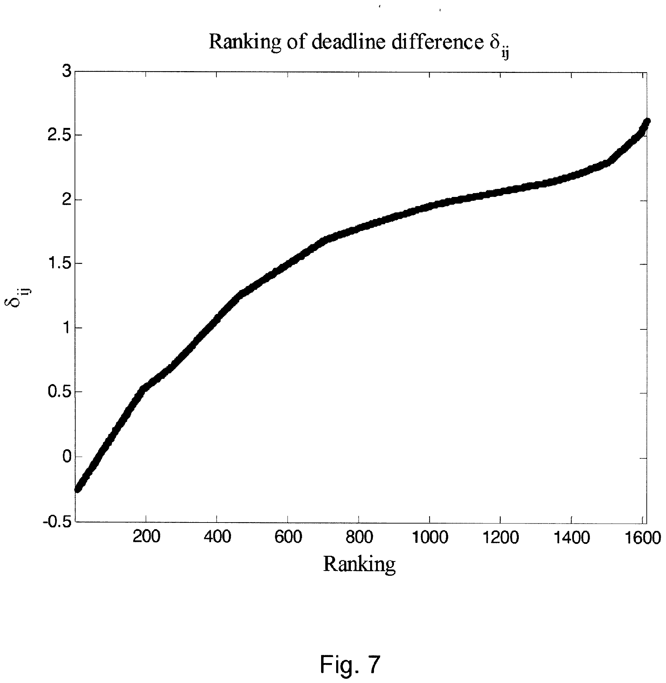

Fig. 6 and Fig. 7 further illustrate the principle in selecting $R_{grant}$ from $R_{min}$. When looking at the delivered bits in individual data flows in the deadline aware queue 125, each bit in a data flow i is associated with a deadline before or at which a bit j has to be scheduled and delivered. In Fig. 6 and Fig. 7 this difference is plotted by showing the amount of bits for the seven flows of Fig. 4, i.e., deadline ranking, with a certain deadline difference $\delta_{ij}$. In Fig. 6, this is shown for the case where $R_{grant}=R_{min}$ and where the deadline margin $\Delta(t)$ is zero. In this case, as can be seen, there is one bit out of all bits in the seven flows that is delivered precisely at its deadline, i.e., where $\delta_{ij}=0$.

When the deadline margin is zero, i.e., when $\Delta=0$, there is one bit (out of all bits in the 7 flows in Fig. 5) that is delivered precisely at its deadline (i.e., $\delta_{ij}=0$), where $\delta_{ij}$ is the difference between the actual and the requested deadline of bit j in flow i. Fig. 6 arranges $\delta_{ij}$ for all flows in their ascending order, where the proposed method guarantees that no deadline goes to negative. Fig. 7 illustrates the case where the granted rate is chosen smaller than $R_{min}$ in order not to starve the non-deadline aware data traffic. Because of this however, some of the deadlines cannot be met. This effect can be seen from Fig. 7 by the negative values of $\delta_{ij}$. In such a case, a congestion message may be sent back to the clients that issued the requests by the controller 140 under step 205 illustrated in Fig. 2. This congestion message may further contain deadline violation information, e.g., the actual delivery time of the data flow in the last request. Once receiving such a message, the sender may adapt the sending rate according to the actual delivery time as $r_{actual} = \frac{s_i}{\tilde{d}_e(i) - \tilde{d}_b(i)}$, where $\tilde{d}_b(i)$ and $\tilde{d}_e(i)$ are the actual begin and end deadline of the data flow.

In order to update the weights accordingly with varying traffic, the controller my run through the steps of Fig. 2 at different moments. Preferably this is done when a new deadline aware data flow is forwarded to the deadline aware queue 125 by the forwarding module 110, when an existing deadline aware data flow exits from the deadline aware queue 125 or after a predefined duration since the steps were last performed.

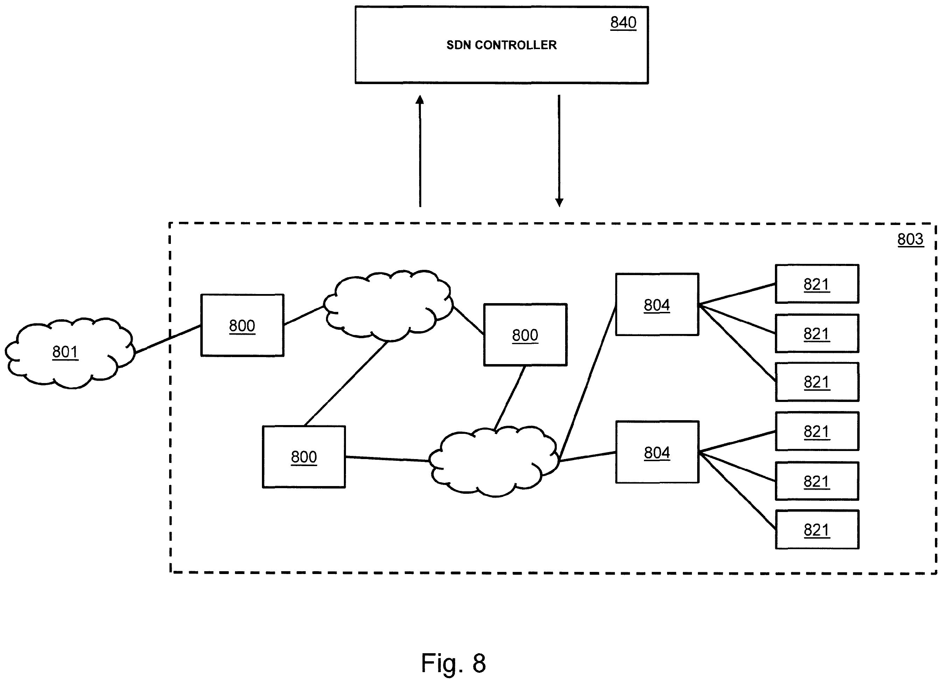

According to a further embodiment, the steps illustrated by Fig. 2 and Fig. 3 performed by the controller 140 are performed by a software defined networking controller. This is further illustrated by Fig. 8 where the networking device 100 of Fig. 1 is embodied as a router 800 and an access node 804 in a data access network 803. The devices 800 and 804 provide data plane functionality by routing and switching data packets between a network 801 such as the internet and customer end user equipment 821. The control plane of the devices 800 and 804 is then handled by a software defined networking controller 840 which sits logically above all network devices 800 and 804 and performs all steps illustrated by Fig. 2 and Fig. 3.

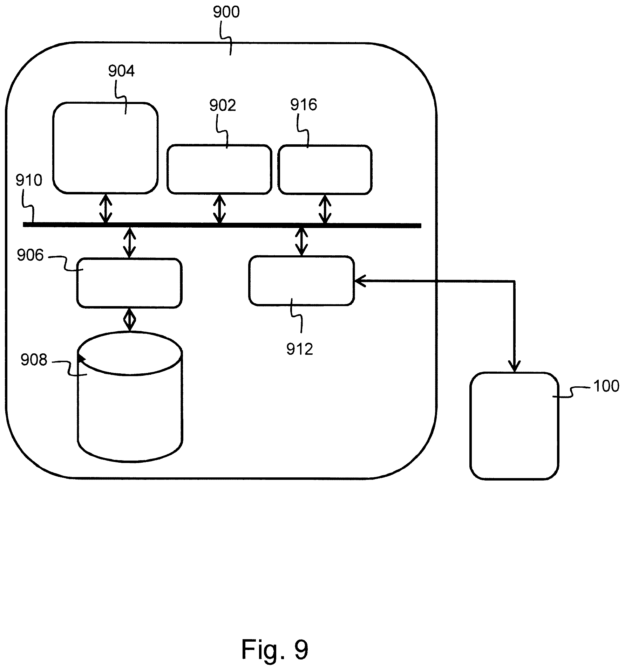

Fig. 9 shows a suitable computing system 900 as a further embodiment of the controller 140 or 840 for performing the steps illustrated by Fig. 2 and 3. Computing system 900 may in general be formed as a suitable general purpose computer and comprise a bus 910, a processor 902, a local memory 904, one or more optional input interfaces 914, one or more optional output interfaces 916, a communication interface 912, a storage element interface 906 and one or more storage elements 908. Bus 910 may comprise one or more conductors that permit communication among the components of the computing system 900. Processor 902 may include any type of conventional processor or microprocessor that interprets and executes programming instructions. Local memory 904 may include a random access memory (RAM) or another type of dynamic storage device that stores information and instructions for execution by processor 902 and/or a read only memory (ROM) or another type of static storage device that stores static information and instructions for use by processor 902. Communication interface 912 may comprise any transceiver-like mechanism such as for example one or more Ethernet interfaces that enables computing system 900 to communicate with other devices and/or systems. The communication interface 912 of computing system 900 may be connected to such another computing system by means of a local area network (LAN) or a wide area network (WAN) such as for example the internet. Storage element interface 906 may comprise a storage interface such as for example a Serial Advanced Technology Attachment (SATA) interface or a Small Computer System Interface (SCSI) for connecting bus 910 to one or more storage elements 908, such as one or more local disks, for example SATA disk drives, and control the reading and writing of data to and/or from these storage elements 908. Although the storage elements 908 above is described as a local disk, in general any other suitable computer-readable media such as a removable magnetic disk, optical storage media such as a CD or DVD, -ROM disk, solid state drives, flash memory cards, ... could be used. The system 900 described above can also run as a Virtual Machine above the physical hardware.

The steps illustrated by the above embodiments may be implemented as programming instructions stored in local memory 904 of the computing system 900 for execution by its processor 902. Alternatively the instructions may be stored on the storage element 908 or be accessible from another computing system through the communication interface 912.

The system 900 may be connected to the forwarding module 110, queues 120 to 125 and scheduler 150 of the networking device 100 by its communication bus 910. This way the system 900 has access to information about the data flows and can apply the calculated weights to the respective queue.

In case the system 900 is used as a further embodiment of a software defined networking controller 840 as illustrated by Fig. 8, the system 900 may communicate with the device 100 by means of the communication interface 912 as illustrated in Fig. 9. The networking device 100 may then receive and transmit information to the system 900 by one of its network interfaces 130.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A networking device (100, 800, 804) for scheduling the transmission of packets over a network interface (130) comprising:

   - a forwarding module (110) for forwarding said packets to a plurality of queues (120-125); and
   - said plurality of queues for temporally buffering said packets comprising:

     o a deadline aware queue (125) for buffering data packets belonging to data flows with hard deadline requirements and for serving said packets to a dynamic weighted fair-queue scheduler (150) according to an Earliest Deadline First or EDF policy; and

o one or more non-deadline aware queues (120-124);

- said dynamic weighted fair-queue scheduler (150) for retrieving said packets from said queues; and wherein a weight for said deadline aware queue is based on a minimum rate requirement for said queue in order to meet said hard deadline requirements.

2. A networking device according to claim 1 further comprising a controller (140) configured to perform the following steps:

- calculating (201) said minimum rate requirement; and
- deriving (202) therefrom a granted rate; and
- calculating (203) said weight from said granted rate and a bandwidth of said network interface; and
- assigning (205) said weight to said deadline aware queue.

3. A networking device according to claim 2 wherein said steps are performed:

- when a new deadline aware data flow is forwarded to said deadline aware queue by said forwarding module, and/or
- when an existing deadline aware data flow exits, and/or
- after a predefined duration since said steps were last performed.

4. A networking device according to claim 1 or 2 wherein said controller (140) is further configured to perform the step of sending (205) a congestion signal to a data flow source when a requested hard deadline requirement cannot be met.

5. A networking device according to any one of claims 2 to 4 wherein said calculating said minimum rate requirement comprises:

- predicting (301) a most probable request pattern for each data flow in said deadline aware queue; and
- calculating (302) a number of bits to be delivered in between deadlines of said data flows to fulfil said predicted request pattern; and
- calculating (303) a bit rate for delivering said bits by at least said deadlines as said minimum rate requirement.

6. A networking device according to any one of claims 1 to 5 wherein said packets correspond to IP or Internet Protocol packets.

7. A computer implemented method for scheduling the transmission of packets over a network interface (130) of a networking device (100, 800, 804); said networking device comprising:

- a forwarding module (110) for forwarding said packets to a plurality of queues (120-125); and
- said plurality of queues for temporally buffering said packets comprising:

o a deadline aware queue (125) for queueing data packets belonging to data flows with hard deadline requirements and for serving said packets to a dynamic weighted fair-queue scheduler (150) according to an Earliest Deadline First or EDF policy; and

o one or more non-deadline aware queues (120-124);

- said dynamic weighted fair-queue scheduler (150) for retrieving said packets from said queues; and wherein a weight for said deadline aware queue is based on a minimum rate requirement for said queue in order to meet said hard deadline requirements;

the method comprising the following steps:

- calculating (201) said minimum rate requirement; and
- deriving (202) therefrom a granted rate; and
- calculating (203) said weight from said granted rate and a bandwidth of said network interface; and
- assigning (204) said weight to said deadline aware queue.

8. A computer program product comprising computer-executable instructions for performing the method according to claim 7 when the program is run on a computer (900).

9. A computer readable storage medium comprising the computer program product according to claim 8.

10. A data processing system programmed for carrying out the method according to claim 7.

11. A software defined networking controller (840) programmed for carrying out the method according to claim 7.

**Patentansprüche**

1. Netzwerkvorrichtung (100, 800, 804) zum Planen der Übertragung von Paketen über eine Netzwerkschnittstelle (130), umfassend:

- ein Weiterleitmodul (110) zum Weiterleiten der besagten Pakete an eine Vielzahl von Warteschlangen (120-125); und
- die besagte Vielzahl von Warteschlangen zum zeitlichen Puffern der besagten Pakete, umfassend:

o eine Fristbeachtungs-Warteschlange (125) zum Puffern von Datenpaketen, die zu Datenströmen mit strengen Fristvorgaben gehören, und zum Liefern der besagten Pakete an einen dynamisch gewichteten Fair-Queuing-Scheduler (150) gemäß einer Earliest-Deadline-First- oder EDF-Methode; und
o eine oder mehrere Nicht-Fristbeachtungs-Warteschlangen (120-124);

- den besagten dynamisch gewichteten Fair-Queuing-Scheduler (150) zum Abrufen der besagten Pakete von den besagten Warteschlangen; und wobei ein Gewicht für die besagte Fristbeachtungs-Warteschlange auf einer Mindestratenvorgabe für die besagte Warteschlange basiert, um die besagten strengen Fristvorgaben zu erfüllen.

2. Netzwerkvorrichtung nach Anspruch 1, weiterhin umfassend einen Controller (140), der zum Durchführen der folgenden Schritte ausgelegt ist:

- Berechnen (201) der besagten Mindestratenvorgabe; und
- Ableiten (202) einer gewährten Rate davon; und
- Berechnen (203) des besagten Gewichts aus der besagten gewährten Rate und einer Bandbreite der besagten Netzwerkschnittstelle ; und
- Zuweisen (205) des besagten Gewichts zu der besagten Fristbeachtungs-Warteschlange.

3. Netzwerkvorrichtung nach Anspruch 2, wobei die besagten Schritte durchgeführt werden:

- wenn ein neuer Fristbeachtungs-Datenstrom an die besagte Fristbeachtungs-Warteschlange von dem besagten Weiterleitmodul weitergeleitet wird, und/oder
- wenn ein bestehender Fristbeachtungs-Datenstrom ausgeht, und/oder
- nach einer vorausdefinierten Dauer ab der letzten Durchführung der besagten Schritte;

4. Netzwerkvorrichtung nach Anspruch 1 oder 2, wobei der besagte Controller (140) weiterhin ausgelegt ist zum Durchführen des Schritts des Sendens (205) eines Stausignals an eine Datenstromquelle, wenn eine angeforderte strenge Fristvorgabe nicht erfüllt werden kann.

5. Netzwerkvorrichtung nach einem beliebigen der Ansprüche 2 bis 4, wobei das besagte Berechnen der besagten Mindestratenvorgabe Folgendes umfasst:

- Vorhersagen (301) eines wahrscheinlichsten Anfragemusters für jeden Datenstrom in der besagten Fristbeachtungs-Warteschlange; und
- Berechnen (302) einer Anzahl von Bits, die zwischen Fristen der besagten Datenströme zu liefern sind, um das besagte vorhergesagte Anfragemuster zu erfüllen; und
- Berechnen (303) einer Bitrate zum Liefern der besagten Bits bis mindestens zu den besagten Fristen als die besagte Mindestratenvorgabe.

6. Netzwerkvorrichtung nach einem beliebigen der Ansprüche 1 bis 5, wobei die besagten Pakete IP- oder Internet-Protocol-Paketen entsprechen.

7. Computerimplementiertes Verfahren zum Planen der Übertragung von Paketen über eine Netzwerkschnittstelle (130) einer Netzwerkvorrichtung (100, 800, 804); wobei die besagte Netzwerkvorrichtung Folgendes umfasst:

   - ein Weiterleitmodul (110) zum Weiterleiten der besagten Pakete an eine Vielzahl von Warteschlangen (120-125); und
   - die besagte Vielzahl von Warteschlangen zum zeitlichen Puffern der besagten Pakete, umfassend:

   ◦ eine Fristbeachtungs-Warteschlange (125) zum Einreihen von Datenpaketen, die zu Datenströmen mit strengen Fristvorgaben gehören, und zum Liefern der besagten Pakete an einen dynamisch gewichteten Fair-Queuing-Scheduler (150) gemäß einer Earliest-Deadline-First- oder EDF-Methode; und
   ◦ eine oder mehrere Nicht-Fristbeachtungs-Warteschlangen (120-124);

   - den besagten dynamisch gewichteten Fair-Queuing-Scheduler (150) zum Abrufen der besagten Pakete von den besagten Warteschlangen; und wobei ein Gewicht für die besagte Fristbeachtungs-Warteschlange auf einer Mindestratenvorgabe für die besagte Warteschlange basiert, um die besagten strengen Fristvorgaben zu erfüllen;

   wobei das Verfahren folgende Schritte umfasst:

   - Berechnen (201) der besagten Mindestratenvorgabe; und
   - Ableiten (202) einer gewährten Rate davon; und
   - Berechnen (203) des besagten Gewichts aus der besagten gewährten Rate und einer Bandbreite der besagten Netzwerkschnittstelle ; und
   - Zuweisen (204) des besagten Gewichts zu der besagten Fristbeachtungs-Warteschlange.

8. Computerprogrammprodukt, umfassend computerausführbare Anweisungen zum Durchführen des Verfahrens nach Anspruch 7, wenn das Programm auf einem Computer (900) gestartet wird.

9. Computerlesbares Speichermedium, umfassend das Computerprogrammprodukt nach Anspruch 8.

10. Datenverarbeitungssystem, das programmiert ist zum Ausführen des Verfahrens nach Anspruch 7.

11. Softwaredefinierter Netzwerk-Controller (840), der programmiert ist zum Ausführen des Verfahrens nach Anspruch 7.

**Revendications**

1. Dispositif de réseau (100, 800, 804) destiné à ordonnancer la transmission de paquets via une interface de réseau (130) comprenant :

   - un module d'acheminement (110) destiné à acheminer lesdits paquets vers une pluralité de files d'attente (120-125) ; et
   - ladite pluralité de files d'attente destinée à mettre temporairement en mémoire tampon lesdits paquets comprenant :

   ◦ une file d'attente sensible à l'échéance (125) pour mettre en mémoire tampon les paquets de données appartenant aux flux de données présentant des exigences d'échéance dures et pour délivrer lesdits paquets à un ordonnanceur de file d'attente équitable à pondération dynamique (150) selon un algorithme EDF ou Earliest Deadline First (échéance la plus rapprochée d'abord) ; et
   ◦ une ou plusieurs files d'attente non sensibles à l'échéance (120-124) ;

   - ledit ordonnanceur de file d'attente équitable à pondération dynamique (150) destiné à récupérer lesdits paquets desdites files d'attente ; et dans lequel une pondération de ladite file d'attente sensible à l'échéance est fonction d'une exigence de débit minimum pour ladite file d'attente afin de satisfaire lesdites exigences d'échéance dures.

**2.** Dispositif de réseau selon la revendication 1 comprenant en outre un contrôleur (140) configuré pour réaliser les étapes suivantes :

- calculer (201) ladite exigence de débit minimum ; et
- en déduire (202) un débit autorisé ; et
- calculer (203) ladite pondération à partir dudit débit autorisé et d'une bande passante de ladite interface de réseau ; et
- allouer (205) ladite pondération à ladite file d'attente sensible à l'échéance.

**3.** Dispositif de réseau selon la revendication 2 dans lequel lesdites étapes sont réalisées :

- lorsqu'un nouveau flux de données sensible à l'échéance est transmis à ladite file d'attente sensible à l'échéance par ledit module d'acheminement, et/ou
- lorsqu'un flux de données sensible à l'échéance existant se termine, et/ou
- après une durée prédéfinie depuis la dernière réalisation desdites étapes.

**4.** Dispositif de réseau selon la revendication 1 ou 2, dans lequel ledit contrôleur (140) est en outre configuré pour réaliser l'étape d'envoi (205) d'un signal de congestion à une source de flux de données lorsqu'une exigence d'échéance dure requise ne peut pas être satisfaite.

**5.** Dispositif de réseau selon l'une quelconque des revendications 2 à 4, dans lequel ledit calcul de ladite exigence de débit minimum comprend les étapes suivantes :

- prévoir (301) un profil de requête le plus probable pour chaque flux de données dans ladite file d'attente sensible à l'échéance ; et
- calculer (302) un nombre de bits à délivrer entre les échéances desdits flux de données afin de satisfaire ledit profil de requête prévu ; et
- calculer (303) un débit binaire pour délivrer lesdits bits avant au moins lesdites échéances en tant qu'exigence de débit minimum.

**6.** Dispositif de réseau selon l'une quelconque des revendications 1 à 5, dans lequel lesdits paquets correspondent à des paquets IP ou Protocole Internet.

**7.** Procédé mis en oeuvre sur ordinateur destiné à ordonnancer la transmission de paquets via une interface de réseau (130) d'un dispositif de réseau (100, 800, 804) ; ledit dispositif de réseau comprenant :

- un module d'acheminement (110) destiné à acheminer lesdits paquets vers une pluralité de files d'attente (120-125) ; et
- ladite pluralité de files d'attente destinée à mettre temporairement en mémoire tampon lesdits paquets comprenant :

  ◦ une file d'attente sensible à l'échéance (125) pour mettre en mémoire tampon les paquets de données appartenant aux flux de données présentant des exigences d'échéance dures et pour délivrer lesdits paquets à un ordonnanceur de file d'attente équitable à pondération dynamique (150) selon un algorithme EDF ou Earliest Deadline First (échéance la plus rapprochée d'abord) ; et
  ◦ une ou plusieurs files d'attente non sensibles à l'échéance (120-124) ;

- ledit ordonnanceur de file d'attente équitable à pondération dynamique (150) destiné à récupérer lesdits paquets desdites files d'attente ; et dans lequel une pondération de ladite file d'attente sensible à l'échéance est fonction d'une exigence de débit minimum pour ladite file d'attente afin de satisfaire lesdites exigences d'échéance dures ;

le procédé comprenant les étapes suivantes :

- calculer (201) ladite exigence de débit minimum ; et
- en déduire (202) un débit autorisé ; et
- calculer (203) ladite pondération à partir dudit débit autorisé et d'une bande passante de ladite interface de réseau ; et

- allouer (204) ladite pondération à ladite file d'attente sensible à l'échéance.

8. Produit-programme informatique comprenant des instructions exécutables sur ordinateur destinées à réaliser le procédé selon la revendication 7 lorsque le programme est exécuté sur un ordinateur (900).

9. Support de stockage lisible par un ordinateur comprenant le produit-programme informatique selon la revendication 8.

10. Système de traitement de données programmé pour réaliser le procédé selon la revendication 7.

11. Contrôleur de réseau défini par logiciel (840) programmé pour réaliser le procédé selon la revendication 7.

Fig. 1

Fig. 2

Boxes:
- ESTIMATE $R_{MIN}$ — 201
- DETERMINE $R_{GRANT}$ — 202
- CALCULATE WEIGHTS — 203
- ASSIGN WEIGHTS — 204
- SIGNAL CONGESTION — 205

EP 2 996 293 B1

EP 2 996 293 B1

```
┌ ─ ─ ─ ─ ─ ─ ─ ─ ─ ─ ─ ─ ─ ┐
                                        ⌐ 201
│   ┌─────────────────┐         │
    │ PREDICT REQUEST │ ⌐ 301
│   │     PATTERN     │         │
    └─────────────────┘
│            │                  │
             ▼
│   ┌─────────────────┐         │
    │ DETERMINE BITS TO│
│   │   BE DELIVERED   │ ⌐ 302  │
    │     BETWEEN      │
│   │    DEADLINES     │        │
    └─────────────────┘
│            │                  │
             ▼
│   ┌─────────────────┐ ⌐ 303   │
    │  DETERMINE BIT   │
│   │ RATE TO DELIVER  │        │
    │     ALL BITS     │
│   └─────────────────┘         │
             │
└ ─ ─ ─ ─ ─ ─│─ ─ ─ ─ ─ ─ ─ ─ ─ ┘
             ▼
```

$R_{MIN}$

Fig. 3

Fig. 4

Deadline-aware content delivery with min bw

Fig. 5

Fig. 6

Ranking of deadline difference $\delta_{ij}$

Fig. 7

Fig. 8

EP 2 996 293 B1

Fig. 9

```
1  Function MinRateAlloc() is
2  │   Input: N, s_i, D = [d_b(1), d_e(1), ..., d_b(N), d_e(N)], Δ, R_min = 0, C_max
3  │   Output: R_min, δ_ij = d_ij - d̃_ij
4  │   /* Generate a list of deadlines in their ascending order T = [t_1, t_2, ..., t_2N]
5  │   T ⟵ rank(D) for t_2 to t_2N do
7  │   │   t̃_k = t_k
   │   end for
8  │   t̃_1 = t_0
9  │   /* Iterate over each timepoint in the sorted list T
10 │   for t_2 to t_2N do
   │   │   Compute C_tot(τ_k) by applying (1) and (2)
11 │   │   r_req(τ_k) = C_tot(τ_k) / (t_k - t̃_{k-1})
12 │   │   if r_req(τ_k) > R_min then
13 │   │   │   R_min ⟵ R_min + (r_req(τ_k) - R_min)(t_k - t̃_{k-1}) / (t_k - t_0 - Δ);
14 │   │   │   t̃_k ⟵ t_k;
15 │   │   else if r_req(τ_k) ≤ R then
16 │   │   │   R_min ⟵ R_min;
17 │   │   │   t̃_k ⟵ t̃_{k-1} + C_tot(τ_k) / R_min;
   │   end for
   end
```

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. WILSON ; H. BALLANI ; T. KARAGIANNIS ; A. ROWSTRON.** Betfer Never Than Late: Meeting Deadlines in Datacenter Networks. *Proc. SIGCOMM,* 2011

- **B. VAMANAN ; J. HASAN ; T. N. VIJAYKUMAR.** Deadline-aware datacenter TCP (D2 TCP). *ACM SIGCOMM Computer Communication Review,* 2012, vol. 42 (4), 115-126
- **K. WONGTHAVARAWAT et al.** *Packet scheduling for QoS support in IEEE 802.16 broadband wireless access systems*